# EUROPÄISCHE PATENTSCHRIFT

(11) **EP 2 261 518 B1**
(45) Veröffentlichungstag und Bekanntmachung des Hinweises auf die Patenterteilung: **05.10.2016**
(21) Anmeldenummer: 10163317.0
(22) Anmeldetag: 19.05.2010
(51) Int. Cl.: F16B 25/10

(54) **Loch- und gewindeformende Schraube**
Hole and thread-forming screw
Vis formant un trou et un filetage

(30) Priorität: 28.05.2009 DE 102009023111
(43) Veröffentlichungstag der Anmeldung: 15.12.2010
(73) Patentinhaber: EJOT Baubefestigungen GmbH, 57334 Bad Laasphe (DE)
(72) Erfinder: Achenbach, Michael, 35236, Breidenbach (DE); Dr. König, Gottfried, 57334, Bad Laasphe (DE); Siegemund, Uwe, 57319, Bad Berleburg (DE)
(74) Vertreter: Puschmann Borchert Bardehle Patentanwälte Partnerschaft mbB

(56) Entgegenhaltungen:
- EP-A2- 0 845 607
- DE-A1- 19 633 730
- US-A- 2 382 019
- US-A- 4 027 573

## Beschreibung

Die Erfindung bezieht sich auf eine loch- und gewindeformende Schraube mit einem Schraubenkopf und einem ein Gewinde mit im Wesentlichen zylindrischem Grund tragenden Schraubenschaft, die in einer konischen Spitze endet, zum Eindrehen in Blechelemente.

Eine derartige Schraube ist in der DE 103 37 250 A1 beschrieben. Bei der bekannten Schraube geht der Bereich des Schraubenschaftes mit selbstfurchendem Gewinde in einen Konus über, der am Schraubenende in einer Spitze ausläuft. Das Gewinde des Schraubenschaftes erstreckt sich auch in den Bereich des Konus und endet dort.

Weiterhin zeigt die DE 196 32 838 A1 eine ähnliche selbstfurchende und selbstbohrende Schraube, bei der im Anschluss an den zylinderischen Schraubenschaft sich ein zylindrischer Bereich anschließt, der in einen Konus übergeht, der in einer Spitze endet. Im Bereich des zylindrischen Teils ist ein Gewinde mit besonders großer Steigung vorgesehen. Um diese Schraube für das Eindringen in Holz in besonderer Weise zu gestalten, sind längs des zylindrischen Teils Gewindestücke vorgesehen, die mit besonders großer Steigung verlaufen, wodurch beim Einschrauben in Holz eine Entfernung von Bohrmehl geschaffen wird, durch die die Gefahr eines Reißens des Holzes vermieden werden soll. Die Gewindegänge mit der großen Schneide wirken dabei nämlich wie diametral angeordnete Schneidkanten.

Es ist weiterhin aus der WO-Schrift WO 99/05420 eine loch- und gewindeformende Schraube bekannt, die in auf nur wenige Gewindegänge beschränkter Länge dazu dient, zum Beispiel Bilder an Gipswänden zu befestigen. Hierzu besitzt die Schraube eine Gestaltung, durch die erreicht wird, dass durch die Gewindegänge herausgeschnittenes Material problemlos wegbefördert wird (siehe Seite 4, 3. Absatz, letzte Zeilen).

Bei der Erfindung handelt es sich um eine loch- und gewindeformende Schraube, die zum Eindrehen in Blechelemente vorgesehen ist, wobei in die Blechelemente bzw. in die mit ihr zu verbindenden Elemente ein Gewinde eingeschnitten wird, ohne dass dabei besonders auf zu entfernendes Material Rücksicht zu nehmen ist, da die Schraube so zu gestalten ist, dass durch ihre Gewindegänge Material aus den Blechelementen lediglich weggedrängt wird und damit in den Elementen ein entsprechendes Gewinde entsteht, an dem sich dann die Schraube festhält.

Die EP 0 845 607 A2 offenbart eine Schraube insbesondere zur Befestigung einer Gipsplatte an einer dünnen Metallschiene. Zwischen Spitze und Schaft ist ein konisch verjüngter Lochformbereich vorgesehen.

Demgemäß liegt der erfindungsgemäßen Schraube die Aufgabe zugrunde, für das Lochformen und anschließende Gewindeformen eine Gestaltung zu schaffen, durch die das Material der Blechelemente, in die die Schraube eingedreht wird, lediglich weggedrückt wird und sich dabei ein Gewinde entsprechend dem Gewinde auf dem Schraubenschaft ausbildet, so dass die Schraube später auch wieder aus dem Verbund der Blechelemente herausgedreht werden kann. Hierzu ist die Schraube derart gestaltet, dass an den Bereich des Schraubenschaftes mit zylindrischem Grund ein in Richtung zum Schraubenende sich stetig verjüngender Lochformbereich anschließt, der einen ersten Abschnitt mit konkav verlaufender Querschnittsverringerung und mit mehreren Gewindegängen aufweist und der in einem zweiten Abschnitt in einen Kegel übergeht, der in der Spitze endet, und dessen Länge insbesondere etwa ein Drittel der Länge des Lochformbereiches ist. Der Bereich des Schraubenschaftes mit zylinderischem Grund kann mindestens doppelt so lang wie die Dicke der Blechelemente sein.

Eine loch- und gewindeformende Schraube gemäß der vorstehend angegebenen Vorschrift drückt bei ihrem Aufsetzen und Eindrücken in aufeinanderliegende Blechelemente zunächst ein von der Spitze des Kegels geformtes Loch ein, das dann gemäß dem Kegelwinkel stetig erweitert wird, wobei das sich über die Außenfläche des Kegels erstreckende Gewinde hilft, das Material der Blechelemente seitlich wegzudrücken und damit das Eindringen der Schraube in die Blechelemente zu erleichtern. Es schließt sich dann innerhalb des Lochformbereichs an den Kegel der Bereich mit konkav verlaufender Querschnittsverringerung an, der zunächst mit relativ geringem Winkel das Material der Blechelemente zur Seite drückt, um dann aufgrund seiner konkaven Querschnittsänderung mit zunehmendem Querschnitt und mit Hilfe der in diesem Bereich vorhandenen mehreren Gewindegänge das entstandene Loch problemlos ausweitet, bis schließlich der Lochformbereich in den Bereich des Schraubenschaftes mit zylindrischem Grund übergeht, woraufhin die Schraube ohne weiteres in das dabei ausgeformte Gewinde gedreht wird und dabei die aufeinanderliegenden Blechelemente miteinander verbindet.

Im Bereich des Schraubenschaftes kann das Gewinde so gestaltet sein, dass es entweder eingängig oder zweigängig verläuft. Im Falle der Zweigängigkeit des Gewindes ergibt sich in der Regel eine mehr symmetrische Gestaltung des Gewindes, so dass später die eingedrehte Schraube auch exakt rechtwinklig zu der Fläche der Blechelemente halten wird.

Im Falle der Zweigängigkeit des Gewindes im Schraubenschaft kann man das Gewinde im Lochformbereich eingängig gestalten, was das Eindringen und Ausbilden eines Loches in den Bauelementen erleichtert.

Eine besonders sensible Einwirkung auf das Material der Blechelemente ergibt sich dann, wenn das Gewinde über den Schraubenschaft und über den Bereich mit konkaver Querschnittsverengung zweigängig ausgebildet ist und im Bereich nur des Kegels eingängig verläuft. In diesem Falle ergibt sich im Bereich des Kegels die besonders günstige Eindreh- und Ausbaufähigkeit zur Ausbildung des Loches und später im Bereich des eigentlichen Gewindes eine günstige Gestaltung des Gewindes für die spätere Halterung der miteinander zu verbindenden Bauteile.

Im Falle einer Unterschiedlichkeit der Dicke der miteinander zu verbindenden Blechelemente kann man das Gewinde der Schraube vorteilhaft derart gestalten, dass das Gewinde im Bereich des Schraubenschaftes zweigängig, im Bereich mit konkaver Querschnittsverringerung dreigängig und im Bereich des Kegels eingängig verläuft. Hierdurch ergibt sich der Vorteil des zweigängigen Gewindes im Bereich des Schraubenschaftes für die gerade Halterung der miteinander zu verbindenden Teile und im Bereich der konkaven Querschnittsverringerung eine besonders intensive Wirkung auf das Material der Blechelemente, die durch das dreigängige Gewinde besonders leicht verdrängt werden.

Um zu Beginn des Eindrehvorganges in ein Paket der Blechelemente das zunächst erforderliche Ausformen des Loches zu erleichtern, kann man die Gewindesteigung im Bereich des Kegels geringer ausbilden, als im Lochformbereich. Hierdurch ergibt sich durch die geringe Gewindesteigung im Bereich des Kegels eine besonders intensive Einwirkung auf das zu verdrängende Material, so dass hierdurch die Ausbildung des Lochs als Gestaltungsmerkmal des gesamten Vorgangs besonders erleichtert wird.

Es hat sich herausgestellt, dass ein Kegelwinkel zwischen 25 ° und 40 ° eine besonders günstige Einwirkung des Kegels auf das Ausbilden des Loches ergibt.

Von Bedeutung ist weiterhin noch der Übergang des Querschnitts des Lochformbereichs an der Stelle des Endes des Kegels in Richtung auf den Schraubenschaft. Der Übergang von dem Winkel des Kegels in den Bereich konkaver Querschnittsänderung gestaltet man zweckmäßig so, dass der letztere Bereich im Anschluss an den Kegel einen Winkel aufweist, der geringer ist als der Winkel des Kegels, so dass zunächst beim Übergang in den Bereich der Querschnittsänderung der Druck auf das umgebende Material der Blechelemente nicht besonders groß ist, der sich dann im Laufe des weiteren Eindrehens durch die gewollte Querschnittsänderung zu größeren Querschnitten erheblich erhöht.

Die Schraube lässt sich vor allem günstig verwenden im Falle der Verbindung von Blechelementen mit einer bestimmten Gesamtdicke, die dann von dem Schraubenschaft besonders sicher festgehalten werden sollen. Dies geschieht dadurch, dass der Schraubenschaft am Schraubenkopf eine Einschnürung aufweist, die in ihrer Breite der Stärke von aufeinanderliegenden Elementen entspricht und deren Grunddurchmesser dem Kerndurchmesser des Gewindes des Schraubenschaftes angenähert ist. In diesem Falle ergibt sich eine Aufnahme der aufeinanderliegenden Elemente im Bereich der Einschnürung, die in dieser Einschnürung weitgehend passen und in dieser gerade gehalten werden, insbesondere dann, wenn es sich bei dem Gewinde des Schraubenschaftes um ein zweigängiges Gewinde handelt, da in diesem Falle die von der Wandung der Einschnürung gehaltenen Blechelemente wegen Unterstützung an gegenüberliegenden Seiten nicht schräg wegkippen können.

In den Figuren sind Ausführungsbeispiele der Erfindung dargestellt. Es zeigen:
- Fig. 1 a: die Schraube mit durchgehend eingängigem Gewinde;
- Fig. 1b: die Darstellung des Gewindegrundes allein über den Bereich des Schraubenschaftes und den Lochformbereich;
- Fig 1c: die Schraube nach Durchdringung von zwei aufeinanderliegenden Blechelementen;
- Fig. 2: die Schraube mit durchgehend zweigängigem Gewinde;
- Fig. 3: die Schraube mit zweigängigem Gewinde im Bereich des Schraubenschaftes und endgängigem Gewinde im Lochformbereich;
- Fig. 4: die Schraube im Bereich des Schraubenschaftes und im Bereich mit konkaver Querschnittsverringerung mit zweigängigem Gewinde und dem Bereich des Kegels mit eingängigem Gewinde;
- Fig. 5: die Schraube im Bereich des Schraubenschaftes mit zweigängigem Gewinde im Bereich mit konkaver Querschnittsverringerung mit dreigängigem Gewinde und im Bereich des Kegels mit eingängigem Gewinde;
- Fig. 6: die Schraube mit einer Gewindesteigung im Bereich des Kegels, die geringer ist als im übrigen Lochformbereich;
- Fig. 7: eine Prinzipdarstellung des Gewindegrundes mit Angabe des Kegelwinkels;
- Fig. 8: eine vergrößerte Darstellung gemäß Fig. 7 mit Darstellung des Winkels im Bereich mit konkaver Querschnittsverringerung im Anschluss an den Kegel;
- Fig. 9: die Schraube mit einer Einschnürung am Schraubenkopf;

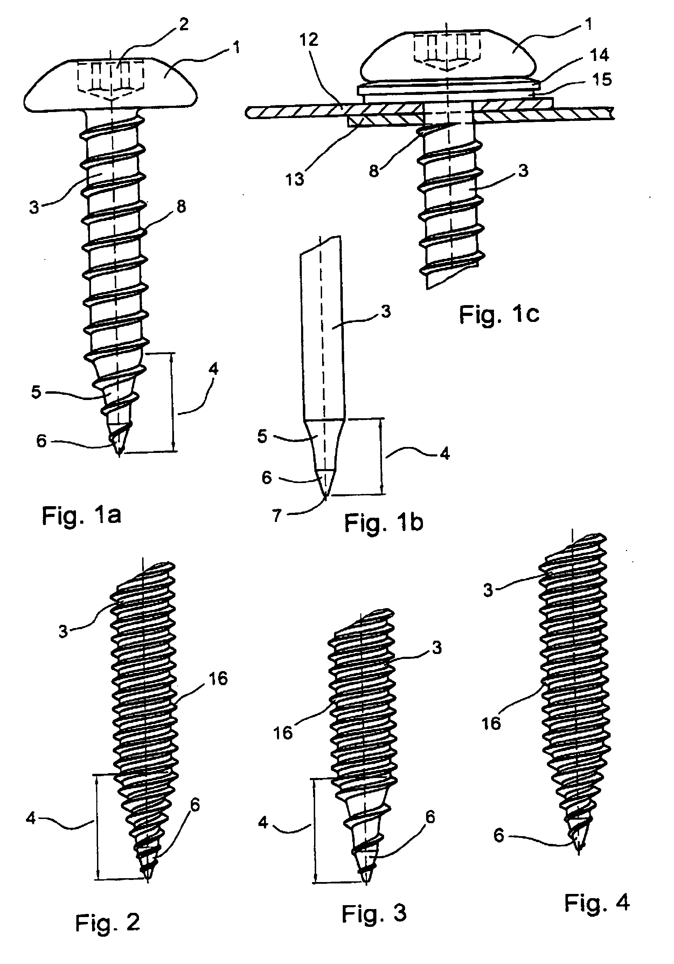

Die in der Figur 1 a dargestellten Schraube weist den Schraubenkopf 1 mit einem Schraubeninnenantrieb und einem Schraubenschaft 3 mit zylindrischem Gewindegrund auf, der an seinem dem Schraubenkopf abgewandten Ende in den sich stetig verjüngernden Lochformbereich 4 übergeht, der aus einem Bereich 5 mit konkaver Querschnittsverringerung des Gewindegrundes und im Anschluss daran den Kegel 6 aufweist, der in der konischen Spitze 7 endet. Über die gesamte Schraube erstreckt sich ein eingängiges Gewinde 8, das durchgehend über den Bereich 3 des Schraubenschaftes und den Lochformbereich 5 verläuft.

In der Figur 1b ist der Gewindegrund der Schraube gemäß Figur 1a für sich allein gezeichnet, um die Wirkung des sich über die Länge der Schraube verändernden Gewindegrundes zu verdeutlichen, der derart verläuft, dass im Bereich 3 der Gewindegrund zylindrisch verläuft, im Bereich mit konkaver Querschnittsverringerung 5 eingewölbt und im anschließenden Bereich des Kegels 6 gleichmäßig konisch verläuft, wobei der Kegel schließlich in der Spitze 7 endet.

Aufgrund dieser Gestaltung ergibt sich im Bereich des Lochformteils 4 zunächst beim Aufsitzen der Schraube auf ein Blechelement zunächst deren Eindringen entlang des Kegels 6, woran sich der Bereich 5 mit konkaver Querschnittsveränderung anschließt, der zunächst mit relativ geringer Querschnittsvergrößerung die Schraube in das vom Kegel 6 vorgeformte Loch hineinzieht, um dann mit dem entsprechend der konkaven Querschnittsveränderung sich stärker ausdehnenden Gewindegrund die endgültige Ausformung des Lochs zu übernehmen, bis am Ende des Lochformbereichs 4 in Richtung zum Schraubenkopf 1 hin sich der Schraubenschaft 3 mit zylindrischem Grund anschließt, der dann unproblematisch in das vorgeformte Gegengewinde im Loch des Blechelements eingedreht werden kann.

Fig. 1c zeigt die Schraube gemäß Figur 1a, eingedreht in zwei plattenförmige, aufeinanderliegende Blechelemente 12 und 13, in die in der eingangs beschriebenen Weise durch die Gestaltung der Schraube jeweils ein Loch ausgeformt worden ist, dessen Durchmesser im wesentlichen dem Durchmesser des Schraubenschaftes 3 entspricht. Dabei wird das Blechelement 13 von dem Ende eines Gewindeganges 8 getragen, während das Blechelement 12 von dem Schraubenkopf 1 über die Lochscheibe 14 mit einem an die Lochscheibe 14 angeklebten Gummiring 15 gegen das untere Blechelement 13 gedrückt wird. Mit Hilfe der Schraube lässt sich ein durchgehendes Loch in den beiden Blechelementen 12 und 13 mittels des Lochformbereichs 5 (siehe Figur 1) formen, bis in das ausgeformte Loch das von dem Schraubenschaft 3 getragene Gewinde 8 in die Blechelemente 12 und 13 eindringt und damit in diesen ein Innengewinde ausformt, neben dem ein Loch in den Blechelementen 12 und 13 mit einem Durchmesser stehen bleibt, der im wesentlichen dem Gewindegrund des Schraubenschaftes entspricht. Damit ist gezeigt, wie zum Beispiel zwei aufeinander liegende Blechelemente mittels der erfindungsgemäßen loch- und gewindeformenden Schraube fest zusammengefügt werden können.

Eine Abwandlung der vorstehend erläuterten Gestaltung der Schraube ist in der Figur 2 dargestellt, in der eine Schraube mit durchgehend zweigängigem Gewinde 16 gezeigt ist. Das zweigängige Gewinde 16 erstreckt sich über sämtliche Bereiche der Schraube, was die Lage der Schraube im Loch zum Beispiel eines Blechelementes in rechtwinkliger Lage zur Oberfläche des Blechelementes bestimmt.

Bei dem in der Figur 3 dargestellten Ausführungsbeispiel der Schraube verläuft das Gewinde im Bereich des Schraubenschaftes 3 zweigängig und im Lochformbereich 4 nur eingängig, wodurch das Lochausformen und Einziehen der Schraube in ein entstehendes Loch eines Blechformelements erleichtert wird.

Figur 4 zeigt eine Abwandlung der Gestaltung der Schraube gemäß Figur 3, und zwar derart, dass eine Schraube gemäß Figur 4 das eingängige Gewinde nur im Bereich des Kegels 6 vorgesehen ist, so dass im Bereich des Kegels besonders stark durch das eingängige Gewinde die Lochausformung und das Einziehen der Schraube in das ausgeformte Loch intensiviert wird.

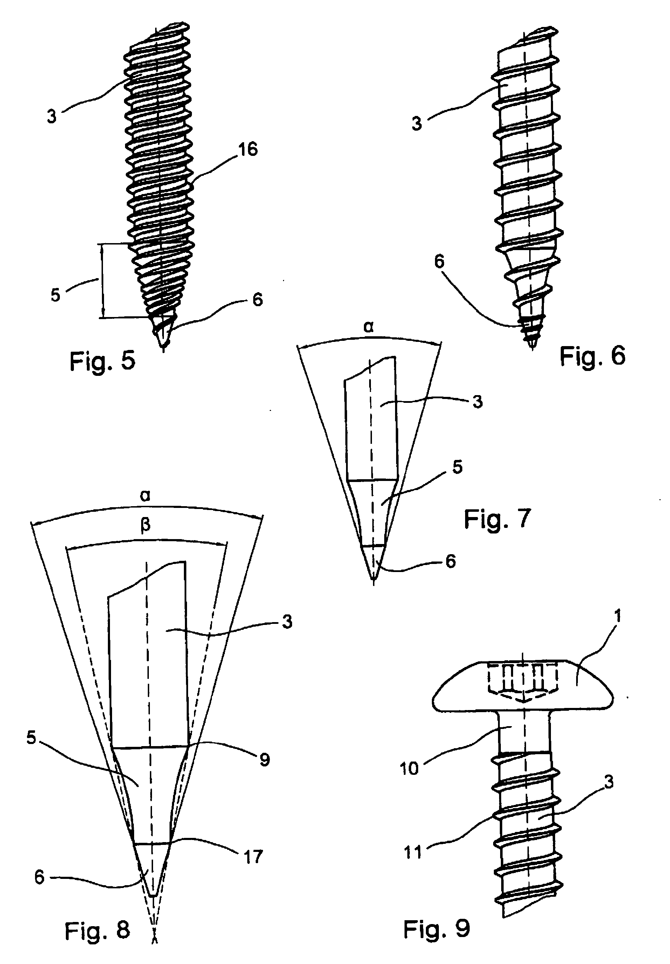

Es hat sich gezeigt, dass eine weitere Variation der Zahl der Gewindegänge in bestimmten Bereichen sich besonders günstig auf das Lochausformen und Einziehen der Schraube in ein Blechelements auswirkt. Eine derartige Gestaltung ist in der Figur 5 gezeigt, bei der das Gewinde im Bereich des Schraubenschaftes 3 zweigängig, im Bereich 5 mit konkaver Querschnittsverringerung dagegen dreigängig und im Bereich des Kegels 6 dagegen nur eingängig verläuft. Diese Gestaltung hat sich als besonders günstige Anwendung auf Blechelements gezeigt, bei denen das Blechelements aus relativ weichem Material, zum Beispiel aus Aluminium, besteht.

Eine weitere Abwandlung der Schraube ist in der Figur 6 dargestellt, gemäß der ein durchgehend eingängiges Gewinde verwendet wird, dass allerdings im Bereich des Kegels 6 mit geringerer Steigung verläuft als in den übrigen Bereichen, so dass das Ausformen des Loches und Einziehen der Schraube in ein entstehendes Loch besonders schonend für das betreffende Material des Blechelements vor sich geht.

In den Figuren 7 und 8 sind ähnlich der Darstellung gemäß Fig. 1b nur die Kemdurchmesser gezeichnet, um an diesen besonders deutlich die jeweilige Winkelstellung zu zeigen.

In Figur 7 ist der Kegelwinkel α eingezeichnet, der zweckmäßig im Bereich zwischen 25° und 40° liegt.

Aus der Darstellung gemäß Fig. 8 geht hervor, dass der Bereich 5 der Querschnittsverringerung, der zwischen den Übergängen 9 und 17 verläuft, so gestaltet ist, dass die geraden Verbindungslinien zwischen den Übergängen 9 und 17 einen Kegel mit dem Winkel β bilden, der kleiner als der Kegelwinkel α ist.

In der Figur 9 ist noch eine Besonderheit dargestellt, gemäß der, der Schraubenschaft 3 mit einer Einschnürung 10 direkt benachbart zum Schraubenkopf 1 versehen ist, deren Grunddurchmesser dem Kemdurchmesser des Gewinde 11 des Schraubenschaftes 3 angenähert ist. Diese Einschnürung kann dazu verwendet werden, um nach Beendigung des Eindrehens der Schraube Blechelemente und eine Scheibe mit Gummiring aufzunehmen.

## Patentansprüche

1. Loch- und gewindeformende Schraube mit einem Schraubenkopf (1) und einem ein Gewinde mit im wesentlichen zylindrischem Grund tragenden Schraubenschaft (3), die in einer konischen Spitze (7) endet zum Eindrehen in Blechelemente, **dadurch gekennzeichnet, dass** an den Bereich des Schraubenschaftes (3) mit zylindrischem Grund ein in Richtung zum Schraubenende sich stetig verjüngender Lochformbereich (4) anschließt, der einen ersten Abschnitt (5) mit konkav verlaufender Querschnittsverringerung und mit mehreren Gewindegängen (8) aufweist und der in einem zweiten Abschnitt in einen Kegel (6) übergeht, der in der Spitze (7) endet.

2. Schraube nach Anspruch 1, **dadurch gekennzeichnet, dass** das Gewinde (8) im Bereich des Schraubenschaftes und des Lochformbereichs eingängig verläuft.

3. Schraube nach Anspruch 1, **dadurch gekennzeichnet, dass** das Gewinde im Bereich des Schraubenschaftes (3) und des Lochformbereichs (4) zweigängig verläuft (Fig. 1a).

4. Schraube nach Anspruch 1, **dadurch gekennzeichnet, dass** sich das Gewinde zweigängig über den Schraubenschaft erstreckt und im Lochformbereich (4) eingängig verläuft (Fig. 2).

5. Schraube nach Anspruch 1, **dadurch gekennzeichnet, dass** sich das Gewinde zweigängig über den Schraubenschaft (3) und den Bereich mit konkaver Querschnittsverringerung erstreckt und im Bereich des Kegels (6) eingängig verläuft (Fig. 4).

6. Schraube nach Anspruch 1, **dadurch gekennzeichnet, dass** das Gewinde im Bereich des Schraubenschaftes zweigängig, im Bereich mit konkaver Querschnittsverringerung dreigängig und im Bereich des Kegels eingängig verläuft (Fig. 5).

7. Schraube nach einem der Ansprüche 1 bis 6, **dadurch gekennzeichnet, dass** die Gewindesteigung im Bereich des Kegels geringer ist als im übrigen Lochformbereich (6) (Fig.6).

8. Schraube nach einem der Ansprüche 1 bis 7, **dadurch gekennzeichnet, dass** der Kegelwinkel (α) des Kegels zwischen 25° und 40° liegt (Fig. 7).

9. Schraube nach einem der Ansprüche 1 bis 8, **dadurch gekennzeichnet, dass** der Winkel des Bereichs mit konkaver Querschnittsänderung im Anschluss an den Kegel (6) mit einem Winkel verläuft, der geringer ist als der Winkel (α) des Kegels(6) (Fig. 6).

10. Schraube nach einem der Ansprüche 1 bis 9, **dadurch gekennzeichnet, dass** der Schraubenschaft am Schraubenkopf (1) eine Einschnürung (10) aufweist, die in ihrer Breite der Stärke von aufeinanderliegenden Elementen entspricht und deren Grunddurchmesser dem Kerndurchmesser des Gewindes des Schraubenschaftes angenähert ist.

## Claims

1. Hole and thread-forming screw comprising a screw head (1) and a screw shank (3) having a thread with an essentially cylindrical thread base thereon, which screw terminates in a conical screw tip (7), allowing the screw to be screwed into sheet-metal parts, **characterized in that** the portion of the screw shank (3) with the cylindrical thread base thereon is adjoined by a hole-forming portion (4) which continuously tapers towards the end of the screw, which portion (4) has a first segment (5) which exhibits a concave reduction in cross-section and which has plural thread turns (8) and which transitions into a cone (6) in a second segment thereof, which cone terminates in the screw tip (7).

2. Screw as claimed in claim 1, **characterized in that** said thread (8) is a single thread in the area of the screw shank and hole forming portions.

3. Screw as claimed in claim 1, **characterized in that** said thread is a double thread in the area of the screw shank (3) and hole forming (4) portions (Fig. 1a).

4. Screw as claimed in claim 1, **characterized in that** said thread is a double thread along the screw shank, and a single thread in the hole forming portion (4) (Fig. 2).

5. Screw as claimed in claim 1, **characterized in that** said thread is a double thread along the screw shank (3) and in the segment which exhibits a concave reduction in cross-section, and that it is a single thread in the area of the cone (6) (Fig. 4).

6. Screw as claimed in claim 1, **characterized in that** said thread is a double thread along the screw shank, that it is a triple thread in the segment which exhibits a concave reduction in cross-section, and that it is a single thread in the area of the cone (Fig. 5).

7. Screw as claimed in claims 1 to 6, **characterized in that** the thread pitch is smaller in the area of the cone than in the remaining hole-forming portion (4).

8. Screw as claimed in claims 1 to 7, **characterized in that** the taper angle (α) of the cone is between 25° and 40° (Fig. 7).

9. Screw as claimed in claims 1 to 8, **characterized in that,** following the cone (6), the angle of the segment which exhibits a concave reduction in cross-section is smaller than the angle (α) of the cone (6) (Fig. 6).

10. Screw as claimed in claims 1 to 9, **characterized in that,** at the screw head (1), the screw shank has a constriction (10) whose width corresponds to the thickness of horizontally stacked elements and whose base diameter approximates the core diameter of the thread of the screw shank.

## Revendications

1. Vis perforeuse et autotaraudeuse avec une tête de vis (1) et une tige de vis (3) portant un filetage avec une base cylindrique pour l'essentiel, qui se termine dans une pointe (7) conique en vue du vissage dans des éléments en tôle, **caractérisée en ce que,** à la zone de la tige de vis (3) à base cylindrique se raccorde une zone de la matrice de perforation (4) se réduisant constamment dans la direction vers l'extrémité de la vis, qui présente une première section (5) avec réduction de section transversale configurée de manière concave et avec plusieurs pas de vis (8), et qui se transforme dans une seconde section en un cône (6), qui se termine à l'extrémité (7).

2. Vis selon la revendication 1, **caractérisée en ce que** le filetage (8) est configuré à un filet dans la zone de la tige de vis et dans la zone de la matrice de perforation.

3. Vis selon la revendication 1, **caractérisée en ce que** le filetage est configuré à deux filets (fig. 1a) dans la zone de la tige de vis (3) et dans la zone de la matrice de perforation (4).

4. Vis selon la revendication 1, **caractérisée en ce que** le filetage se déploie à deux filets à travers la tige de vis et est configuré à un filet (fig. 2) dans la zone de la matrice de perforation (4).

5. Vis selon la revendication 1, **caractérisée en ce que** le filetage se déploie à deux filets à travers la tige de vis (3) et la zone avec réduction de section transversale concave et est configuré à un filet (fig. 4) dans la zone du cône (6).

6. Vis selon la revendication 1, **caractérisée en ce que** le filetage est configuré à deux filets dans la zone de la tige de vis, à trois filets dans la zone avec réduction de section transversale concave et à un filet (fig. 5) dans la zone du cône.

7. Vis selon une quelconque des revendications 1 à 6, **caractérisée en ce que** le pas de filetage est plus bas dans la zone du cône que dans le reste de la zone de la matrice de perforation (6) (fig.6).

8. Vis selon une quelconque des revendications 1 à 7, **caractérisée en ce que** l'angle du tronc de cône (α) du cône se trouve entre 25° et 40° (fig. 7).

9. Vis selon une quelconque des revendications 1 à 8, **caractérisée en ce que** l'angle de la zone avec modification de section transversale concave s'étend en jonction au cône (6) avec un angle qui est inférieur à l'angle (α) du cône (6) (fig. 6).

10. Vis selon une quelconque des revendications 1 à 9, **caractérisée en ce que** la tige de vis sur la tête de vis (1) présente une striction (10), qui correspond dans sa largeur à l'épaisseur d'éléments superposant les uns sur les autres et dont le diamètre de base est rapproché du diamètre du noyau du filetage de la tige de vis.
